(19) Europäisches Patentamt / European Patent Office / Office européen des brevets

(11) **EP 3 307 471 B1**

(12) **EUROPÄISCHE PATENTSCHRIFT**

(45) Veröffentlichungstag und Bekanntmachung des Hinweises auf die Patenterteilung:
**22.05.2024   Patentblatt 2024/21**

(21) Anmeldenummer: **16728055.1**

(22) Anmeldetag: **10.06.2016**

(51) Internationale Patentklassifikation (IPC):
**B23K 26/08** *(2014.01)*      **B23K 26/38** *(2014.01)*
**B23K 26/361** *(2014.01)*

(52) Gemeinsame Patentklassifikation (CPC):
**B23K 26/0846; B23K 26/0876; B23K 26/361;**
**B23K 26/38;** B23K 2101/16; B23K 2101/34;
B23K 2103/166

(86) Internationale Anmeldenummer:
**PCT/EP2016/063317**

(87) Internationale Veröffentlichungsnummer:
**WO 2016/198612 (15.12.2016 Gazette 2016/50)**

(54) **VERFAHREN ZUR HERSTELLUNG EINER BLECHPLATINE**

METHOD FOR PRODUCING A SHEET METAL BLANK

PROCÉDÉ DE FABRICATION D'UN FLAN DE TÔLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2015   DE 102015210847**
**02.07.2015   DE 102015212444**

(43) Veröffentlichungstag der Anmeldung:
**18.04.2018   Patentblatt 2018/16**

(73) Patentinhaber: **Schuler Pressen GmbH**
**91093 Heßdorf (DE)**

(72) Erfinder:
• **LIEBEL, Martin**
**91236 Alfeld (DE)**
• **HUNGER, Manuel**
**90763 Fürth (DE)**
• **KRONTHALER, Michael Robert**
**8184 Bachenbülach (CH)**

(74) Vertreter: **Dr. Gassner & Partner mbB**
**Wetterkreuz 3**
**91058 Erlangen (DE)**

(56) Entgegenhaltungen:
EP-A1- 2 420 344          WO-A1-2009/105608
WO-A1-2014/131659      DE-A1- 10 235 903
DE-A1-102013 203 383   US-A1- 2014 151 347

**Beschreibung**

Die Erfindung betrifft ein Verfahren zur Herstellung einer Blechplatine.

Nach dem Stand der Technik ist es beispielsweise aus der WO 2009/105608 A1 bekannt, ein von einer Spule bzw. einem Coil abgewickeltes Blechband in einer Transportrichtung durch eine Laserschneidvorrichtung zu transportieren. Mittels der Laserschneidvorrichtung werden mitlaufend Blechplatinen einer vorgegebenen Kontur aus dem Blechband geschnitten.

Aus der EP 2 420 344 A1 ist ein Verfahren zum Herstellen eines Konturschnitts in einem transportierten Blechband bekannt. Das Blechband wird in Breitenrichtung in drei Arbeitsbereiche geteilt, denen jeweils eine eigene Laserschneideinrichtung zugeordnet ist. Jede Laserschneideinrichtung kann einen Teil des Konturschnitts durchführen.

Die WO 2014/131659 A1 schlägt ein Verfahren zum Schneiden einer Blechplatine mit einer vorgegebenen Kontur aus einem Blechband mittels einer Laserschneidvorrichtung vor. Eine Steuereinrichtung dient zur Steuerung der Bewegung eines Laserschneidkopfes. Der Weg des Blechbands wird fortlaufend mittels einer Wegmesseinrichtung gemessen. Aus den Wegmesswerten werden die erforderlichen Bewegungen des Laserschneidkopfes berechnet.

Ein Verfahren zur Behandlung von beschichteten Stahlblechen ist aus der JP H10 15682 A bekannt, bei dem ein erster Laserschneidkopf zum Abtragen der Oberfläche und ein zweiter Laserschneidkopf zum Durchtrennen des Blechs gemeinsam bewegt werden.

Aus der JP S60 174 289 A und der DE 195 06 768 A sind Verfahren bekannt, bei denen das Abtragen der Oberfläche und das anschließende Schneiden eines Blechs nacheinander durch denselben Laserkopf durchgeführt werden, wobei die Arbeitsparameter jeweils eingestellt werden.

Insbesondere zur Herstellung von Blechplatinen im Bereich der Automobilindustrie werden heute Blechmaterialien verwendet, welche oberflächlich mit einer Schicht, z. B. einer Aluminium-Silizium-Schutzschicht, beschichtet sind. Eine solche Aluminium-Silizium-Schutzschicht schützt beim Warmumformen die Stahloberfläche gegen Verzunderung und Korrosion.

Wenn eine Blechplatine im Bereich ihrer Schnittkante mit einer anderen Blechplatine verschweißt wird, gelangt Material der Schutzschicht in den Bereich der Schweißnaht. Es bilden sich in der Schweißnaht Fremdphasen aus, welche die Schweißverbindung in unerwünschter Weise schwächen.

Um dem entgegenzuwirken, ist es aus der DE 10 2013 215 346 A1 bekannt, die Aluminium-Silizium-Schutzschicht mittels Laser entlang eines zu einer späteren Schweißnaht korrespondierenden Pfads abzutragen.

Ferner ist es nach dem Stand der Technik bekannt, nach der Herstellung einer Blechplatine mittels Laserschneiden, in vorgegebenen Randabschnitten entlang der Schnittkante, die Schutzschicht mittels Laser oder Bürsten abzutragen. Das ist allerdings zeit- und kostenaufwändig. Trotz des Abtrags der Schutzschicht treten im Bereich einer später hergestellten Schweißnaht unerwünschterweise Schwachstellen auf.

Aufgabe der Erfindung ist es, die Nachteile nach dem Stand der Technik zu beseitigen. Es soll insbesondere ein Verfahren zur Herstellung einer Blechplatine angegeben werden, welche im Bereich ihrer Schnittkante die effiziente Herstellung einer Schweißnaht mit weniger Fehlstellen ermöglicht. - Nach einem weiteren Ziel der Erfindung soll ein Verfahren angegeben werden, mit dem schnell und effizient Blechplatinen hergestellt werden können, bei denen an ihrer Oberseite in vorgegebenen Flächenabschnitten Material abgetragen ist.

Diese Aufgabe wird durch die Merkmale des Patentanspruchs 1 gelöst. Zweckmä-ßige Ausgestaltung der Erfindung ergeben sich aus den Merkmalen der Patentansprüche 2 bis 7.

Nach der Erfindung wird ein Verfahren zur Herstellung einer Blechplatine mit einer vorgegebenen Kontur mit folgenden Schritten vorgeschlagen:

kontinuierliches Bewegen des Blechbands in Transportrichtung x, Messen des Wegs des Blechbands und Übermitteln von Wegmesswerten an eine Steuerung,

mitlaufendes oberflächliches Abtragen von Material an einer Oberseite eines Blechbands in zumindest einem vorgegebenen Flächenabschnitt durch Ablation mittels eines ersten Lasers, welcher Bestandteil einer ersten Abtrageinrichtung ist, und nachfolgend

mitlaufendes Schneiden des Blechbands entlang eines der Kontur der Blechplatine entsprechenden Schneidwegs mittels zumindest eines zweiten Lasers, welcher Bestandteil einer stromabwärts der ersten Abtrageinrichtung vorgesehenen Schneideinrichtung ist,

wobei die Herstellung des Flächenabschnitts bei einer stromaufwärtigen Blechplatine und das Schneiden einer stromabwärtigen Blechplatine gleichzeitig erfolgt, wobei die Bewegungswege der ersten Abtrageinrichtung und der Schneideinrichtung mittels der Steuerung anhand der gemessenen Wegmesswerte automatisch korrigiert und/oder neu berechnet werden,

wobei der Flächenabschnitt einen ersten Pfad umfasst, wobei ein Verlauf des ersten Pfads zumindest zu einem Abschnitt der Kontur der Blechplatine korrespondiert, und wobei das Blechband derart geschnitten wird, dass der Schneidweg den ersten Pfad entlang seiner Längserstreckung teilt.

In Abkehr vom Stand der Technik wird erfindungsgemäß zuerst Material, beispielsweise eine Aluminium-Silizium-Schutzschicht, an der Oberfläche des Blechbands abgetragen. Nachfolgend wird sodann das Blechband entsprechend der vorgegebenen Kontur der Blechplatine geschnitten. Es hat sich gezeigt, dass nach dem erfindungsgemäßen Verfahren hergestellte Blechplatinen mit anderen Blechplatinen verschweißt werden können, ohne dass sich in der Schweißnaht unerwünschte, die Schweißnaht schwächende Fremdphasen ausbilden.

Beim erfindungsgemäßen Verfahren wird vorteilhafterweise ein vorgegebener Flächenabschnitt des Blechbands durch Ablation abgetragen. Das Abtragen erfolgt mitlaufend mit dem kontinuierlich bewegten Blechband. Gleichzeitig wird stromabwärts das Blechband zur Herstellung der Blechplatine mitlaufend geschnitten. Dabei sind der erste und der zweite Laser vorteilhafterweise unabhängig voneinander bewegbar. Insbesondere sind der erste und der zweite Laser nicht mechanisch miteinander gekoppelt. Der erste und der zweite Laser können gleichzeitig entlang unterschiedlicher Wege geführt werden.

Unter dem Begriff "oberflächliches Abtragen" wird verstanden, dass im Flächenabschnitt Material bis zu einer Tiefe von höchstens 0,2 mm, vorzugsweise höchstens 0,16 mm, von der Oberfläche abgetragen wird. Eine Dicke des Blechbands ist erheblich größer als die Dicke der von der Oberfläche abgetragenen Schicht. Durch das oberflächliche Abtragen wird im Blechband kein Durchbruch, Schlitz oder dgl. gebildet. Mit dem "oberflächlichen Abtragen" können auch Oxidschichten, Ölschichten, Farbschichten, Verunreinigungen oder dgl. von der Oberfläche des Blechbands entfernt werden.

Nach einer Ausgestaltung der Erfindung wird beim Schritt b) zumindest eine auf der Oberseite vorgesehene erste Schicht abgetragen. Es ist auch möglich, dass beim Schritt b) eine zwischen der ersten Schicht und einem Blechmaterial zwischengeschaltete zweite Schicht abgetragen wird. Die erste sowie ggf. die zweite Schicht unterscheiden sich in ihrer Zusammensetzung vom Blechmaterial, auf dem sie aufgebracht sind. Bei der ersten Schicht kann es sich beispielsweise um eine Aluminium-Silizium-Schutzschicht oder eine Zink-Schutzschicht handeln. Bei der zweiten Schicht kann es sich um eine Zwischenschicht aus $FeAl_3$, $Fe_2Al_3$ handeln, welche zwischen dem Blechmaterial und einer Aluminium-Silizium-Schutzschicht angeordnet ist. - Die erste Schicht kann eine Dicke im Bereich von 0,01 bis 0,1 mm und die zweite Schicht eine Dicke im Bereich von 0,005 bis 0,05 mm, aufweisen.

Zweckmäßigerweise wird beim Schritt b) das Abtragen durch Ablation mittels eines ersten Lasers durchgeführt. Beim ersten Laser kann es sich um einen gepulsten Laser handeln, mit dem beispielsweise 10 bis 1.000 Pulse/mm erzeugt werden. Der erste Laser kann eine Leistung im Bereich von 100 bis 2.000 W, vorzugsweise 850 bis 1.600 W, aufweisen. Es kann sich um einen Gasentladungslaser, z. B. $CO_2$-Laser, oder einen Festkörperlaser, z. B. Faser-, Dioden-, Scheiben- oder Stablaser, handeln.

Zusätzlich ist es auch möglich, beim Schritt b) das Abtragen mechanisch durchzuführen. Dazu können rotierende Bürsten oder dgl. eingesetzt werden.

Nach der Erfindung wird beim Schritt c) das Schneiden des Blechbands mittels zumindest eines zweiten Lasers durchgeführt. Es kann sich dabei um einen herkömmlichen, zum Schneiden von Blechmaterial geeigneten Laser handeln. Zum Schneiden eines Blechbands wird der zweite Laser vorteilhafterweise entlang des vorgegebenen Schneidwegs bewegt.

Nach der Erfindung wird das Blechband kontinuierlich in Transportrichtung x bewegt und sowohl das Abtragen im Flächenabschnitt als auch die Herstellung des Schnitts entlang des Schneidwegs mitlaufend durchgeführt. D. h. es kann beispielsweise in einer herkömmlichen Laserschneideinrichtung stromaufwärts einer Laserschneidstation eine Laser-Ablationsstation vorgesehen sein. In der Laser-Ablationsstation erfolgt das Abtragen von Material an der Oberseite des Blechbands entlang des Flächenabschnitts. Nachfolgend gelangt der Flächenabschnitt in den Bereich der stromabwärts angeordneten Schneideinrichtung bzw. Laserschneidstation. Dort wird sodann das Blechband geschnitten. - Die Herstellung des Flächenabschnitts bei einer stromaufwärtigen Blechplatine und das Schneiden einer stromaufwärtigen Blechplatine erfolgt erfindungsgemäß gleichzeitig.

Nach der Erfindung umfasst der Flächenabschnitt einen ersten Pfad, wobei ein Verlauf des ersten Pfads zumindest zu einem Abschnitt der Kontur der Blechplatine korrespondiert und wobei das Blechband derart geschnitten wird, dass der Schneidweg den ersten Pfad entlang seiner ersten Längserstreckungsrichtung teilt. Das ermöglicht es, Blechplatinen entlang ihrer Schnittkanten mit anderen Blechplatinen zu verschweißen.

Nach einer weiteren vorteilhaften Ausgestaltung der Erfindung verläuft der Schneidweg etwa mittig zwischen den Ufern des ersten Pfads. In diesem Fall weist der Schneidweg zu beiden Ufern jeweils einen maximalen Abstand auf. Es kann damit sicher und zuverlässig ein unerwünschter Eintrag von an der Oberfläche des Blechbands befindlichen Verunreinigungen, insbesondere Bestandteilen einer Schutzschicht, in den Bereich der Schnittkante vermieden werden.

Eine sich zu einer ersten Längserstreckungsrichtung des ersten Pfads senkrecht verlaufende erste Breite B1 des ersten Pfads ist größer als eine sich zu einer zweiten Längserstreckungsrichtung des Schneidwegs senkrecht verlaufende zweite Breite B2 des Schneidwegs. Für ein Verhältnis zwischen der ersten Breite B1 und der zweiten Breite B2 gilt vorteilhafterweise:

$$B1/B2 = A,$$

wobei A ein Wert im Bereich von 2 bis 100 ist.

Die erste Breite B1 beträgt üblicherweise 0,5 bis 4,0 mm. Die zweite Breite B2 beträgt üblicherweise 0,05 bis 0,7 mm.

Üblicherweise ist ein Blechband nicht nur an seiner Oberseite mit einer Schutzschicht, sondern auch an seiner der Oberseite gegenüberliegenden Unterseite mit einer derartigen Schutzschicht beschichtet. Beim Schritt b) kann vorteilhafterweise Material an einer Unterseite des Blechbands entlang eines zweiten Pfads abgetragen werden, wobei der zweite Pfad in Draufsicht auf den ersten Pfad im Wesentlichen deckungsgleich mit dem ersten Pfad ist. Auch für die Herstellung des zweiten Pfads können in analoger Weise zur Herstellung des ersten Pfads die vorgenannten vorteilhaften Ausgestaltungen Verwendung finden.

Nach einer Ausgestaltung kann der Schneidweg auch den zumindest einen Flächenabschnitt umgeben. In diesem Fall ist der Flächenabschnitt vorteilhafterweise rund ausgebildet. Zweckmäßigerweise wird das Material an der Oberfläche des Blechbands in mehreren aufeinanderfolgenden vorgegebenen Flächenabschnitten abgetragen. In diesem Fall kann auf die Blechplatine ein weiteres Blech derart gelegt werden, dass die Flächenabschnitte überdeckt werden. Es kann dann mittels Punktschweißverfahren das weitere Blech auf die Blechplatine geschweißt werden.

Ferner wird eine nicht erfindungsgemäße Vorrichtung zur Herstellung einer Blechplatine vorgeschlagen, umfassend:

eine Transporteinrichtung zum Transport eines Blechbands in einer Transportrichtung x,

eine erste Abtrageinrichtung zum mitlaufenden oberflächlichen Abtragen von Material an einer Oberseite eines Blechbands mittels eines ersten Lasers in zumindest einem vorgegebenen Flächenabschnitt,

zumindest eine in Transportrichtung x stromabwärts angeordnete Schneideinrichtung zum mitlaufenden Schneiden des Blechbands mittels eines zweiten Lasers entlang eines der Kontur der Blechplatine entsprechenden Schneidwegs, und

eine Steuerung zum Steuern der Bewegungen des ersten Lasers und des zweiten Lasers derart, dass die Herstellung des Flächenabschnitts bei einer stromaufwärtigen Blechplatine und das Schneiden einer stromabwärtigen weiteren Blechplatine gleichzeitig erfolgt.

Die Vorrichtung ermöglicht die Herstellung von Blechplatinen, deren Oberfläche entlang der Flächenabschnitte abgetragen ist. In den vorgenannten Flächenabschnitten kann die Blechplatine mit einer weiteren Blechplatine mittels Schweißen verbunden werden, wobei die dabei hergestellte Schweißnaht im Wesentlichen frei von die Schweißnaht schwächenden Fremdphasen ist. Die Vorrichtung ermöglicht ein schnelles und effizientes Herstellen von Blechplatinen, welche verschweißt werden sollen.

Bei der Steuerung handelt es sich zweckmäßigerweise um einen Computer, mit dem die erste Abtrageinrichtung sowie die Schneideinrichtung gesteuert werden. Die erste Abtrageinrichtung weist als Abtragwerkzeug einen ersten Laser auf. Die Schneideinrichtung weist als Schneidwerkzeug einen zweiten Laser auf. Die Bewegungen der Laser werden mit in der ersten Abtrageinrichtung und der Schneideinrichtung vorgesehenen Antrieben so gesteuert, dass gleichzeitig mitlaufend in den vorgegebenen Flächenabschnitten des Blechbands Material abgetragen und stromabwärts das Blechband entlang der Kontur der Blechplatine geschnitten wird. Dabei können sich die Bewegungswege des ersten und des zweiten Lasers unterscheiden. Zum Schneiden der Blechplatine können insbesondere auch mehrere zweite Laser vorgesehen sein, um die Dauer des Schneidvorgangs zu verkürzen und damit an die Dauer des Ablationsvorgangs anzupassen.

Nach einer vorteilhaften Ausgestaltung umfasst die Transporteinrichtung eine Walzenrichtmaschine. Sie kann auch Transportwalzen umfassen. Mit der Transporteinrichtung wird das Blechband vorteilhafterweise kontinuierlich in Transportrichtung x transportiert. Dabei kann das Blechband gleichzeitig gerichtet werden.

Nach einer weiteren Ausgestaltung umfasst die erste Abtrageinrichtung eine erste Bewegungseinrichtung zum Bewegen eines ersten Abtragwerkzeugs in Transportrichtung x und in eine senkrecht dazu verlaufende y-Richtung gemäß dem vorgegebenen ersten Pfad. Bei der Bewegungseinrichtung kann es sich um eine herkömmliche Bewegungseinrichtung handeln, mit der z. B. ein Laserschneidkopf mitlaufend mit einem Blechband zur Herstellung einer vorgegebenen Kontur bewegt wird. Eine geeignete Bewegungseinrichtung ist beispielsweise aus der US 2010/0181165 A1 bekannt. Dabei ist ein Werkzeug bewegbar in der y-Richtung an einem Arm oder einer Brücke angebracht, welche ihrerseits in x-Richtung bewegbar ist. Die Bewegungen erfolgen üblicherweise mittels Servomotoren, welche mit einer computergestützten Steuerung gesteuert werden. Als Bewegungseinrichtung können aber auch Roboter oder dgl. verwendet werden. Es wird insoweit beispielsweise auf den Offenbarungsgehalt der US 2010/0122970 A1 verwiesen.

Nach einer Ausgestaltung ist der Flächenabschnitt ein zumindest zu einem Abschnitt der Kontur der Blechplatine korrespondierender erster Pfad und der Schneidweg teilt den ersten Pfad entlang seiner ersten Längserstreckungsrichtung. Das ermöglicht einen schnellen und effizienten Abtrag von Material in einem Bereich der Schnittkanten der Blechplatine. In Abkehr vom Stand der Technik ist es nicht mehr erforderlich, eine bereits geschnittene Blechplatine geeignet zu positionieren, deren Schnittkanten zu reinigen sowie die Oberseite und die Unterseite im Bereich der Schnittkanten oberflächlich abzutragen. Die vorgeschlagene Vorrichtung ermöglicht eine schnelle und effiziente Herstellung von Blechplatinen.

Nach einer weiteren Ausgestaltung ist eine zweite Abtrageinrichtung zum oberflächlichen Abtragen von Material an einer der Oberseite gegenüberliegenden Unterseite des Blechbands entlang eines einen zweiten Pfad bildenden weiteren Flächenabschnitts vorgesehen, wobei der zweite Pfad in Draufsicht auf den ersten Pfad im Wesentlichen deckungsgleich mit dem ersten Pfad ist. Die zweite Abtrageinrichtung ermöglicht in analoger Weise zur ersten Abtrageinrichtung ein Abtragen von Material an der Unterseite des Blechbands. Die zweite Abtrageinrichtung umfasst zweckmäßigerweise eine zweite Bewegungseinrichtung zum Bewegen eines zweiten Abtragwerkzeugs in x- und y-Richtung gemäß dem vorgegebenen zweiten Pfad. Die erste und die zweite Abtrageinrichtung können, insbesondere zur Herstellung deckungsgleicher Pfade, miteinander steuerungstechnisch und/oder mechanisch gekoppelt sein.

Bei dem ersten und/oder dem zweiten Abtragwerkzeug handelt es sich zweckmäßigerweise um einen ersten Laser oder ein Schleifwerkzeug. Als erster Laser kann beispielsweise ein gepulster Laser verwendet werden, wie er aus der DE 10 2013 215 346 A1 bekannt ist. Das Abtragen von Material kann durch Druckluft oder Inertgas, jeweils mit einem Druck von mindestens 3 bar ($3 \cdot 10^5$ Pa), und unter einem bezüglich des Laserstrahls spitzen Winkel auf den Laserspot des auf der Oberfläche des Blechbands auftreffenden Laserstrahls unterstützt werden.

Die Schneideinrichtung umfasst zumindest einen in x- und y-Richtung gemäß dem vorgegebenen Schneidweg bewegbaren zweiten Laser. Als zweiter Laser kann ein herkömmlicher Laser eingesetzt werden, welcher zum Schneiden von Blechmaterialien geeignet ist. Es ist auch denkbar, als Schneideinrichtung eine mechanische Schneideinrichtung, beispielsweise eine mitlaufende Schere oder dgl., zu verwenden.

Ferner wird bei dem erfindungsgemäßen Verfahren eine Steuerung zum Steuern der Bewegungen des ersten Abtragwerkzeugs und des Schneidwerkzeugs eingesetzt. Mit der Steuerung werden zusätzlich die Bewegungen des zweiten Abtragwerkzeugs gesteuert. - Bei der Steuerung handelt es sich beispielsweise um einen Computer, in dem die Koordinaten des ersten Pfads sowie des Schneidwegs gespeichert sind. Die Koordinaten entsprechen der vorgegebenen Kontur der Blechplatine. Das Blechband wird kontinuierlich bewegt und die Bewegungswege der Schneid- und Abtragwerkzeuge werden entsprechend dem Vorschubweg des Blechbands mittels der Steuerung automatisch neu berechnet bzw. korrigiert. Um insoweit eine besonders exakte Korrektur bzw. Neuberechnung zu gewährleisten, ist eine Messeinrichtung zur Messung eines Wegs des Blechbands in x-Richtung vorgesehen sein. Ferner ist eine Einrichtung zur Übermittlung von mit der Messeinrichtung gemessenen Wegmesswerten an die Steuerung vorgesehen sein. Mit der Steuerung werden zweckmäßigerweise sämtliche Bewegungen der Schneid- und Abtragwerkzeuge gleichzeitig gesteuert. Das ermöglicht eine besonders genaue Einhaltung der vorgegebenen Kontur der Blechplatine sowie der Lage des Schneidwegs innerhalb des jeweiligen Pfads.

Nachfolgend wird ein Ausführungsbeispiel der Erfindung anhand der Zeichnungen näher erläutert. Es zeigen:

Fig. 1     eine schematische Draufsicht auf eine nicht erfindungsgemäße Vorrichtung, die zur Durchführung des erfindungsgemäßen Verfahrens geeignet ist,

Fig. 2     eine Querschnittsansicht durch das Blechband gemäß der Schnittlinie A-A' in Fig. 1,

Fig. 3     eine Draufsicht auf eine erste Blechplatine und

Fig. 4     eine Draufsicht auf eine zweite Blechplatine.

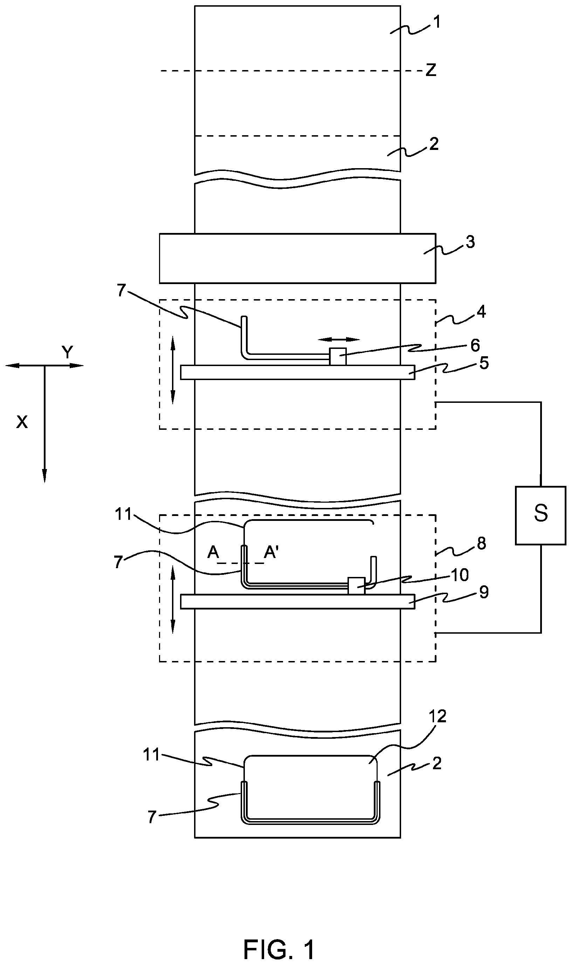

Fig. 1 zeigt schematisch in Draufsicht eine Vorrichtung zur Durchführung des Verfahrens. Mit dem Bezugszeichen 1 ist eine Blechspule bzw. ein Coil bezeichnet, welche um eine Achse Z rotierbar ist. Ein von der Spule 1 abgewickeltes Blechband 2 erstreckt sich in eine Transportrichtung bzw. x-Richtung. Stromabwärts der Spule 1 ist eine Walzenrichtmaschine 3 vorgesehen, mit welcher das Blechband 2 gerichtet und, vorzugsweise kontinuierlich, in x-Richtung transportiert wird. Stromabwärts der Walzenrichtmaschine 3 ist eine erste Abtrageinrichtung 4 vorgesehen, welche mit einer unterbrochenen Linie kenntlich gemacht ist. Die erste Abtrageinrichtung 4 umfasst eine das Blechband 2 übergreifende erste Brücke 5, welche sich in einer senkrecht zur x-Richtung erstreckenden y-Richtung erstreckt. Die erste Brücke 5 ist in x-Richtung hin und her bewegbar, d. h. auch entgegen der Transportrichtung x. An der ersten Brücke 5 ist ein erstes Abtragwerkzeug 6, z. B. ein erster Laser, angebracht, welches in y-Richtung über die gesamte Breite des Blechbands 2 hin und her bewegbar ist. Mit dem Bezugszeichen 7 ist ein erster Pfad bezeichnet, welcher durch oberflächliches Abtragen an der Oberseite O des Blechbands 2 mittels des ersten Abtragwerkzeugs 6 hergestellt worden ist.

Stromabwärts der ersten Abtrageinrichtung 4 ist eine Schneideinrichtung 8 vorgesehen, welche wiederum durch eine unterbrochene Linie kenntlich gemacht ist. Die Schneideinrichtung 8 umfasst eine zweite Brücke 9, welche in der y-Richtung das Blechband 2 übergreift. Die zweite Brücke 9 ist in x-Richtung hin und her bewegbar, d. h. auch entgegen der Transportrichtung x. An der zweiten Brücke 9 ist eine Schneideinrichtung 10, z. B. ein zweiter Laser, angebracht, welches in y-Richtung hin und her bewegbar ist. Mit dem Bezugszeichen 11 ist ein Schneidweg bezeichnet, welcher mit der Schneideinrichtung 10 hergestellt worden ist. Mit dem Bezugszeichen 12 ist eine erste Blechplatine bezeichnet, welche vollständig aus dem Blechband 2 herausgeschnitten worden ist. Die Kontur der ersten Blechplatine 12 wird durch den Schneidweg 11 begrenzt. Der erste Pfad 7 erstreckt sich entlang eines Abschnitts des Schneidwegs 11.

Anstelle der vorgenannten Portaleinrichtung, welche eine Brücke und einen darauf hin- und her bewegbaren Schlitten umfasst, ist es selbstverständlich auch möglich, die Abtrag- und/oder Schneidwerkzeuge beispielsweise mittels eines Roboters oder anderen geeigneten Einrichtungen entlang der vorgegebenen Bewegungswege zu bewegen. Die Bewegungen der Werkzeuge können beispielsweise auch auf der Grundlage eines Polarkoordinatensystems gesteuert werden.

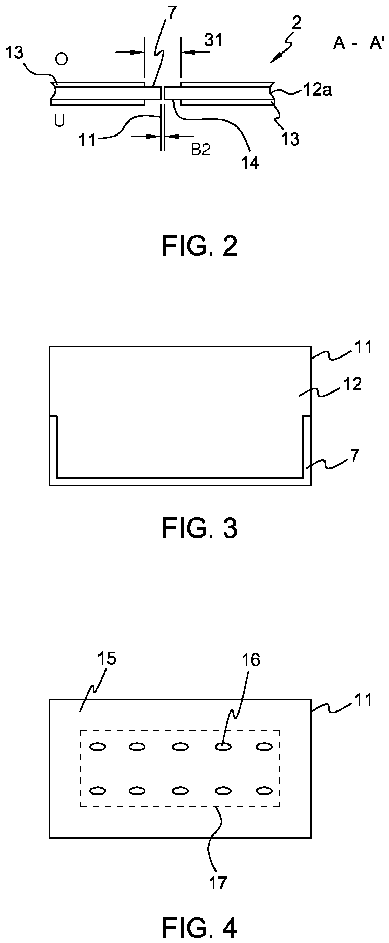

Fig. 2 zeigt eine Schnittansicht gemäß der Schnittlinie A-A' in Fig. 1. Der erste Pfad 7 weist eine erste Breite B1 auf, welche größer als eine zweite Breite B2 des Schneidwegs 11 bzw. des Schnitts ist. Das Blechband 2 besteht aus einem Stahlmaterial 12a, welches an seiner Oberseite O sowie der gegenüberliegenden Unterseite U mit einer Schutzschicht 13, z. B. einer Aluminium-Silizium-Schutzschicht, beschichtet ist. Gegenüberliegend des ersten Pfads 7 befindet sich in deckungsgleicher Anordnung ein zweiter Pfad 14. Entlang des ersten Pfads 7 und des zweiten Pfads 14 ist die Schutzschicht 13 abgetragen.

Fig. 3 zeigt eine Draufsicht auf die erste Blechplatine 12. Daraus wird nochmals deutlich, dass an eine durch den Schneidweg 11 begrenzte Kontur der ersten Blechplatine 12 abschnittsweise der erste Pfad 7 angrenzt.

Fig. 4 zeigt eine Draufsicht auf eine zweite Blechplatine 15. Die zweite Blechplatine 15 weist innerhalb einer durch den Schneidweg 11 begrenzten Kontur mehrere Flächenabschnitte 16 auf, in denen von der Oberseite die Schutzschicht 13 des Blechbands 2 abgetragen worden ist. Die Flächenabschnitte 16 weisen die Form eines kurzen Pfads, eine runde oder eine ovale Form auf. Die Flächenabschnitte 16 dienen der Herstellung einer Punktschweißverbindung mit einem mit der zweiten Blechplatine 15 zu verbindenden weiteren Blechteil 17, welches hier durch eine unterbrochene Linie angedeutet ist. Bei der zweiten Blechplatine 15 grenzen die Flächenabschnitte 16 nicht an die durch den Schneidweg 11 erzeugte umlaufende Schnittkante der zweiten Blechplatine 15 an.

Die Funktion der Vorrichtung ist Folgende:
Das von der Spule 1 abgewickelte Blechband 2 wird mittels der Walzenrichtmaschine 3 gerichtet und gleichzeitig kontinuierlich in die Transportrichtung x transportiert. In der ersten Abtrageinrichtung 4 wird ein erstes Abtragwerkzeug 6, beispielsweise ein geeigneter erster Laser, entlang einer vorgegebenen Kontur der herzustellenden ersten Blechplatine 12 mitlaufend bewegt. Die entsprechenden Bewegungen der ersten Brücke 5 sowie des ersten Abtragwerkzeugs 6 werden mittels einer Steuerung S gesteuert. Gegenüberliegend der ersten Abtrageinrichtung 4 kann eine (hier nicht gezeigte) zweite Abtrageinrichtung vorgesehen sein, mit der an einer der Oberseite O gegenüberliegenden Unterseite U des Blechbands 2 ein zweiter Pfad 14 abgetragen wird. - Es ist nicht für alle Anwendungen erforderlich, eine zweite Abtrageinrichtung vorzusehen.

Nach der Herstellung des zumindest ersten Pfads 7 wird das Blechband 2 der stromabwärts nachgeordneten Schneideinrichtung 8 zugeführt. Mittels der Schneideinrichtung 8 wird der Schneidweg 11 hergestellt, welcher der vorgegebenen Kontur der herzustellenden Blechplatine 12 entspricht. Der Schneidweg 11 teilt den ersten Pfad 7 entlang seiner Längserstreckungsrichtung. Infolgedessen ist im Bereich der Schnittkante die Schutzschicht 13 bereits vor der Herstellung des Schneidwegs 11 entfernt. Durch die nachfolgende Herstellung des Schneidwegs 11 mittels der Schneideinrichtung 10 können keine Verunreinigungen in den Bereich der Schnittkante eingetragen werden.

Nach einer weiteren Funktion der Vorrichtung ist es auch möglich, mit dem ersten Abtragwerkzeug 6 Flächenabschnitte 16 von der Oberseite O des Blechbands 2 abzutragen, welche die Form eines kurzen Pfads, kreisrund oder oval ausgebildet sind. Nachfolgend kann mittels der stromabwärts nachgeordneten Schneideinrichtung 8 der Schneidweg 11 auch so geführt werden, dass der Schneidweg 11 die Flächenabschnitte 16 nicht schneidet, d. h. der Schneidweg 11 umgibt die Flächenabschnitte 16.

Obwohl es in den Figuren nicht gezeigt ist, ist es nach dem Verfahren selbstverständlich auch möglich, Blechplatinen herzustellen, welche im Bereich des Schneidwegs 11 zumindest abschnittsweise einen ersten Pfad 7 sowie außerhalb des Schneidwegs 11, aber innerhalb der Kontur, Flächenabschnitte 16 aufweisen. Zusätzlich können derartige Blechplatinen im Bereich der Schnittkanten auch mit einem zweiten Pfad 14 versehen sein, welcher dem ersten Pfad 7 gegenüberliegt.

Die Bewegungen der Schneideinrichtung 10 werden in ähnlicher Weise wie die des ersten Abtragwerkzeugs 6 mittels der Steuerung gesteuert. Zu diesem Zweck kann eine (hier nicht näher gezeigte) Messeinrichtung, beispielsweise ein am Blechband anliegendes Schlepprad, vorgesehen sein. Die damit gemessenen Wegmesswerte können an die Steuerung übermittelt werden, so dass in geeigneter Weise die Bewegungen des ersten Abtragwerkzeugs 6 und der Schneideinrichtung 10 gesteuert werden können.

Das Verfahren ermöglicht in schneller und effizienter Weise die Herstellung von Blechplatinen, bei denen zumindest abschnittsweise Material zumindest von der Oberseite abgetragen ist. Bei dem Material kann es sich insbesondere um eine Schutzschicht, beispielsweise eine Aluminium-Silizium-Schutzschicht oder eine Zink-Schutzschicht, handeln. Derartige Blechplatinen können im Bereich der hergestellten Flächenabschnitte mittels Schweißen mit einer anderen Blechplatine verbunden werden. Die dabei hergestellte Schweißverbindung zeichnet sich durch einen besonders geringen Gehalt an Fehlstellen aus. Unerwünschte Fremdphasen innerhalb der Schweißnaht können weitestgehend vermieden werden.

Bezugszeichenliste

| | |
|---|---|
| 1 | Spule |
| 2 | Blechband |
| 3 | Walzenrichtmaschine |
| 4 | erste Abtrageinrichtung |
| 5 | erste Brücke |
| 6 | erstes Abtragwerkzeug |
| 7 | erster Pfad |
| 8 | Schneideinrichtung |
| 9 | zweite Brücke |
| 10 | Schneideinrichtung |
| 11 | Schneidweg |
| 12 | erste Blechplatine |
| 12a | Stahlmaterial |
| 13 | Schutzschicht |
| 14 | zweiter Pfad |
| 15 | zweite Blechplatine |
| 16 | Flächenabschnitt |
| 17 | Blechteil |

| | |
|---|---|
| B1 | erste Breite |
| B2 | zweite Breite |
| O | Oberseite |
| S | Steuerung |
| U | Unterseite |
| x | Transportrichtung |
| Z | Achse |

**Patentansprüche**

1. Verfahren zur Herstellung einer Blechplatine (12, 15) mit einer vorgegebenen Kontur, mit folgenden Schritten:

   a) kontinuierliches Bewegen des Blechbands (2) in Transportrichtung (x), Messen des Wegs des Blechbands (2) und Übermitteln von Wegmesswerten an eine Steuerung (S),
   b) mitlaufendes oberflächliches Abtragen von Material an einer Oberseite (O) eines Blechbands (2) in zumindest einem vorgegebenen Flächenabschnitt (16) durch Ablation mittels eines ersten Lasers (6), welcher Bestandteil einer ersten Abtrageinrichtung (4) ist, und nachfolgend

   c) mitlaufendes Schneiden des Blechbands (2) entlang eines der Kontur der Blechplatine (12, 15) entsprechenden Schneidwegs (11) mittels zumindest eines zweiten Lasers (10), welcher Bestandteil einer stromabwärts der ersten Abtrageinrichtung (4) vorgesehenen Schneideinrichtung (8) ist,
   wobei die Herstellung des Flächenabschnitts (16) bei einer stromaufwärtigen Blechplatine (12, 15) und das Schneiden einer stromabwärtigen Blechplatine (12, 15) gleichzeitig erfolgt, wobei die Bewegungswege der ersten Abtrageinrichtung (4) und der Schneideinrichtung (8) mittels der Steuerung (S) anhand der gemessenen Wegmesswerte automatisch korrigiert und/oder neu berechnet werden, wobei der Flächenabschnitt (16) einen ersten Pfad (7) umfasst, wobei ein Verlauf des ersten Pfads (7) zumindest zu einem Abschnitt der Kontur der Blechplatine (12) korrespondiert, und wobei das Blechband (2) derart geschnitten wird, dass der Schneidweg (11) den ersten Pfad (7) entlang seiner Längserstreckungsrichtung teilt.

2. Verfahren nach Anspruch 1, wobei beim Schritt b) zumindest eine auf der Oberseite (O) vorgesehene erste Schicht abgetragen wird.

3. Verfahren nach einem der vorhergehenden Ansprüche, wobei beim Schritt b) eine zwischen der ersten Schicht und einem Blechmaterial (12a) zwischengeschaltete zweite Schicht abgetragen wird.

4. Verfahren nach einem der vorhergehenden Ansprüche, wobei der Schneidweg (11) den zumindest einen Flächenabschnitt (16) umgibt.

5. Verfahren nach einem der Ansprüche 3 oder 4, wobei für ein Verhältnis zwischen einer sich zu einer ersten Längserstreckungsrichtung des ersten Pfads (7) senkrecht verlaufenden ersten Breite B1 und einer sich zu einer zweiten Längserstreckungsrichtung des Schneidwegs (11) senkrecht verlaufenden zweiten Breite B2 gilt:

$$B1/B2 = A,$$

wobei A ein Wert im Bereich von 2 bis 100 ist.

6. Verfahren nach einem der vorhergehenden Ansprüche, wobei beim Schritt b) Material an einer Unterseite (U) des Blechbands (2) entlang eines einen zweiten Pfad (14) bildenden weiteren Flächenabschnitts (16) abgetragen wird, wobei der zweite Pfad (14) in Draufsicht auf den ersten Pfad (7) im Wesentlichen deckungsgleich mit dem ersten Pfad (7) ist.

**7.** Verfahren nach einem der vorhergehenden Ansprüche, wobei als Transporteinrichtung (3) eine Walzenrichtmaschine verwendet wird.

**Claims**

**1.** A method of manufacturing a sheet metal blank (12, 15) having a predetermined contour, comprising the following steps:

> a) continuous movement of the metal strip (2) in the transport direction (x), measurement of the path of the metal strip (2) and transmission of measured path values to a controller (S),
> b) concurrent superficial ablation of material on an upper surface (O) of a sheet metal strip (2) in at least one predetermined surface section (16) by ablation by means of a first laser (6), which is a component of a first ablation device (4), and subsequently
> c) concurrent cutting of the sheet metal strip (2) along a cutting path (11) corresponding to the contour of the sheet metal blank (12, 15) by means of at least one second laser (10), which is part of a cutting device (8) provided downstream of the first ablation device (4),
> wherein the production of the surface section (16) on an upstream sheet metal blank (12, 15) and the cutting of a downstream sheet metal blank (12, 15) take place simultaneously,
> wherein the movement paths of the first ablation device (4) and the cutting device (8) are automatically corrected and/or recalculated by means of the controller (S) on the basis of the measured path values,
> wherein the surface section (16) comprises a first path (7), wherein a course of the first path (7) corresponds to at least a portion of the contour of the sheet metal blank (12), and wherein the sheet metal strip (2) is cut in such a way that the cutting path (11) divides the first path (7) along its longitudinal direction of extension.

**2.** Method according to claim 1, wherein in step b) at least a first layer provided on the upper surface (O) is removed.

**3.** Method according to one of the preceding claims, wherein in step b) a second layer interposed between the first layer and a sheet material (12a) is removed.

**4.** Method according to one of the preceding claims, wherein the cutting path (11) surrounds the at least one surface section (16).

**5.** Method according to any one of claims 3 or 4, wherein for a ratio between a first width B1 extending perpendicular to a first longitudinal extension direction of the first path (7) and a second width B2 extending perpendicular to a second longitudinal extension direction of the cutting path (11)

$$B1/B2 = A,$$

where A is a value in the range from 2 to 100.

**6.** Method according to one of the preceding claims, wherein in step b) material is removed from an underside (U) of the metal strip (2) along a further surface section (16) forming a second path (14), wherein the second path (14) is substantially congruent with the first path (7) in plan view of the first path (7).

**7.** Method according to one of the preceding claims, wherein a roller straightener is used as transport device (3).

**Revendications**

**1.** Procédé de fabrication d'un flan de tôle (12, 15) aux contours prédéfinis comprenant les étapes suivantes :

> a) déplacement en continu du feuillard (2) dans un sens de transport (x), mesure de la trajectoire du feuillard (2) et transmission des valeurs mesurées de déplacement à une commande (S),
> b) enlèvement superficiel simultané de matériau sur une face supérieure (O) d'un feuillard (2) dans au moins une partie de surface (16) prédéfinie par ablation au moyen d'un premier laser (6), qui fait partie d'un premier dispositif d'enlèvement (4), et ensuite
> c) découpe simultanée du feuillard (2) le long d'une trajectoire de coupe (11) correspondant aux contours du flan de tôle (12, 15) au moyen d'au moins un deuxième laser (10), qui fait partie d'un dispositif de découpe (8) prévu en aval du premier dispositif d'enlèvement (4),
> en ce que la fabrication de la partie de surface (16) pour un flan de tôle (12, 15) en amont et la découpe d'un flan de tôle (12, 15) en aval sont effectuées simultanément,
> en ce que les courses de déplacement du premier dispositif d'enlèvement (4) et du dispositif de découpe (8) sont automatiquement corrigées et/ou recalculées au moyen de la commande (S) à l'aide des valeurs de mesure de déplacement mesurées,
> en ce que la partie de surface (16) comporte un premier chemin (7), en ce qu'un tracé du premier chemin (7) correspond au moins à une partie du contour du flan de tôle (12), et en ce que le feuillard (2) est découpé de telle sorte que la trajectoire de coupe (11) divise le premier chemin (7) le long de son sens d'extension longitudinal.

2. Procédé selon la revendication 1, en ce qu'à l'étape b) au moins une première couche prévue sur la face supérieure (O) est enlevée.

3. Procédé selon l'une des revendications précédentes, en ce qu'à l'étape b) une deuxième couche insérée ente la première couche et un matériau de tôle (12a) est enlevée.

4. Procédé selon l'une des revendications précédentes, en ce que la trajectoire de coupe (11) entoure au moins ladite partie de surface (16).

5. Procédé selon l'une des revendications 3 ou 4, en ce que pour un rapport entre une première largeur B1 s'étendant perpendiculairement à un premier sens d'extension longitudinal du premier chemin (7) et une deuxième largeur B2 s'étendant perpendiculairement à un deuxième sens d'extension longitudinal de la trajectoire de coupe (11) s'applique ce qui suit :

$$B1/B2 = A,$$

A étant une valeur dans une plage comprise entre 2 et 100.

6. Procédé selon l'une des revendications précédentes, en ce qu'à l'étape b) du matériau sur une face inférieure (U) du feuillard (2) est enlevé le long d'une autre partie de surface (16) formant un deuxième chemin (14), en ce que le deuxième chemin (14) vue de dessus par rapport au premier chemin (7) coïncide sensiblement au premier chemin (7).

7. Procédé selon l'une des revendications précédentes, en ce qu'un redresseur à rouleaux est utilisé comme dispositif de transport (3).

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009105608 A1
- EP 2420344 A1
- WO 2014131659 A1
- JP H1015682 A
- JP S60174289 A
- DE 19506768 A
- DE 102013215346 A1
- US 20100181165 A1
- US 20100122970 A1